# EUROPEAN PATENT APPLICATION

(11) **EP 1 892 485 A1**
(43) Date of publication of application: **27.02.2008**
(21) Application number: 06017564.3
(22) Date of filing: 23.08.2006
(51) Int. Cl.: F24J 2/51, C03C 25/34, E04B 1/74

(54) **Solar collector**

(71) Applicant: Rockwool International A/S, 2640 Hedehusene (DK)
(72) Inventor: Konietzny, Thomas Marek, 47167 Duisburg (DE); Hansen, Erling Lennart, 2820 Gentofte (DK)
(74) Representative: Barz, Peter

(57) **Abstract**

A solar collector comprises a mineral wool insulation based on man-made vitreous fibres (MMVF) which are bonded by a formaldehyde-free polymeric binder system.

## Description

### Field of the Invention

The present invention relates to a solar collector, in particular, a flat-plate collector, having a mineral wool insulation based on man-made vitreous fibres (MMVF) which are bonded by a formaldehyde-free polymeric binder system.

### Background of the Invention

Solar collectors transform solar radiation into heat and transfer that heat to a medium (water, solar fluid, or air). The solar heat can, for instance, be used for heating water, to back up heating systems or for heating swimming pools.

Solar collectors can be classified into two major categories based on the working fluid used to cool them. These two are "liquid" and "air". Each of the two categories can then be sub-classified according to average temperature range over which they are intended to be used, and can be used effectively. These classifications are: "low temperature", "medium temperature" and "high temperature", with some overlap among the classifications depending on the construction of the individual collector model.

### Low-temperature Collectors

Plastic low-temperature collectors have been used widely for swimming pool heating. However, because of the deteriorating effects of ultra violet radiation and stagnation temperatures on some plastic solar collectors, metal collectors are being more widely utilized. Unglazed collectors with aluminum absorber plates and copper water passages appear to be most cost effective over the typical metal collector lifetime of 20 years or more. All-copper collectors for swimming pool heating also work well, but are generally more expensive for the same performance characteristics. Copper is preferred over any other metal for water passages because of its high conductivity and compatibility with water. Almost all other metals must be separated from direct contact with the water being heated by a heat exchanger, which seriously reduces the collector efficiency.

### Medium-temperature collectors

Medium temperature collectors typically are flat-plate collectors, enclosed in an insulated case, with one or two glazings. The intended temperature range of operation is from about 10 to 100°C above ambient temperature. For the lower end of this range, single-glazed collectors with non-selective absorber plates are most cost effective. In the middle and high end of the range, selective collectors with one or two glazings become more cost effective. Typical applications include water heating, space heating and some medium temperature industrial heating uses.

### High temperature collectors

High temperature collectors include some overlap from flat plate collectors in the medium temperature range, with selective absorber plates and heavy insulation, and may have temperature capabilities enhanced in installation by being mounted in a sun-tracking system. Many other variations of high temperature collectors include evacuated-tube flat plate types, parabolic dish reflector types, parabolic trough types and modified parabola types. Most high temperature collectors depend on some type of sun tracking, in one or two axes, for effective operation. Tracking collectors are used to a small extent for domestic water heating and space heating, but are limited in cost effectiveness and reliability by the complexities of the tracking mechanisms, where used. Other uses are highly specialized, such as in absorption cooling systems, and applications where steam must be generated, or very high temperatures are required with sacrifice of efficiency. While parabolic and other types of focusing collectors do not respond to indirect solar radiation, and collect little, if any heat when the sun is obscured enough to prevent a clear shadow from being thrown, flat plate collectors respond to radiation from all directions, and will collect diffuse radiation energy of as much as 30% of normal direct energy when there is no visible shadow.

### Flat plate collectors

A flat-plate collector essentially consists of an absorber, a transparent cover, a housing, and insulation.

The heart of a solar collector is the absorber, which is usually composed of several narrow metal strips. A carrier fluid for heat transfer flows through heat-carrying pipes or tubes, which are connected to the absorber strip. In plate-type absorbers, two sheets are sandwiched together allowing the medium to flow between the two sheets. Absorbers are typically made of copper or aluminum.

Swimming pool absorbers, on the other hand, are usually made of plastic (mostly EPDM, but also of polypropylene and polyethylene), as the lower temperatures involved do not require greater heat capacity.

Usually an iron-poor solar safety glass is used as a transparent cover, as it transmits a great amount of the short-wave light spectrum. Simultaneously, only very little of the heat emitted by the absorber escapes the cover (greenhouse effect). In addition, the transparent cover prevents the collected heat of being carried away by wind or convection. Together with the housing, the cover protects the absorber from adverse weather conditions. Typical housing (case) materials include aluminum and galvanized steel; sometimes fibreglass-reinforced plastic is used.

Case insulation is not the only important thermal insulation in a quality collector. The absorber plate and connecting tubing penetrating the housing must be thermally insulated from the case at all points of support. Heat losses can be severe if either the absorber or tubing touches the case or is supported through heat-conducting materials to the case.

As an insulation material, polyurethane or polyisocyanurate foam has become popular for solar collectors because it has a high insulation value and is very easy to handle. However, its use is associated with certain disadvantages. An otherwise well-designed solar collector will experience stagnation temperatures of up to 260°C that will cause the insulation of this type to outgas and rapidly destroy the effectiveness of the collector by condensation of volatile organic components and formation of visible deposits on the transparent cover (so-called "fogging effect"). Furthermore, urethane and related products may be prohibited in collectors in fire hazard areas, because of their toxic fume production.

Similarly, insulating materials based on mineral fibres bonded with conventional phenol/formaldehyde resins have the disadvantage of undesired toxic formaldehyde emission at the high working temperatures of solar collectors, in particular, during stagnation periods.

Accordingly, there existed a need for improved insulating materials which are suitable for use in solar collectors.

### Summary of the Invention

An object of the present invention is therefore to provide a solar collector which has a mineral wool insulation that avoids or at least reduces the detrimental effect of condensation or deposition of volatile binder components or binder decomposition products ("fogging") on performance and efficiency of the solar collector.

Another object of the present invention is to provide a solar collector which has an mineral wool insulation that is not associated with the health hazards of prior art insulation materials.

These and other objects are achieved in accordance with the present invention by providing a solar collector which has a mineral wool insulation based on man-made vitreous fibres (MMVF) which are bonded by a formaldehyde-free polymeric binder system.

The present inventors have found that when using a formaldehyde-free polymeric binder system, "fogging" of the solar collector can effectively be prevented. For instance, there is no significant reduction of transmittancy of the transparent cover of a flat plate collector within the critical wave length range of between 0.2 µm and 2.5 µm. The solar collectors according to the present invention may therefore be produced in an economical manner without requiring means for avoiding or removing any hazardous emissions. Furthermore, it has been found that the mineral wool solar collector insulation according to the present invention exhibits superior dimensional stability as compared to a needle-punched or stitched mineral wool mats.

### Brief description of the drawing

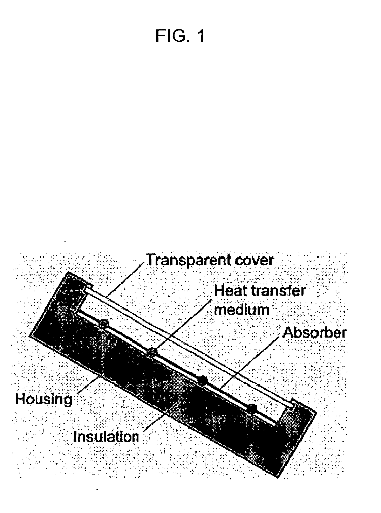

Figure 1 is a schematic representation of a typical flat plate collector comprising a housing, an insulation, an absorber, a plurality of tubes carrying a heat transfer medium, and a transparent cover. The flat plate collector shown is just an example of suitable solar collector designs, and the invention is not limited to flat plate collectors or to the specific embodiment shown.

### Description of the preferred embodiments

The solar collector according to the present invention is characterized by a mineral wool insulation based on man-made vitreous fibres (MMVF) which are bonded by a formaldehyde-free polymeric binder system. The other elements of the solar collector and its design and construction features are the same as with the conventional solar collectors described herein-above.

### Absorber

For instance, the preferred absorbers are made of copper or aluminum. Absorbers are usually black, as dark surfaces demonstrate a particularly high degree of light absorption. In order to reduce energy loss through heat emission, the most efficient absorbers have a selective surface coating. This coating enables the conversion of a high proportion of the solar radiation into heat, simultaneously reducing the emission of heat.

The absorber coating on both unglazed and glazed solar collector absorber plates must be stable and durable to withstand the weather exposure of unglazed collectors and the stagnation temperatures of glazed collectors without outgassing. For either type, the paint and primer should be baked, and must be a top quality coating material such as polyceram or epoxy. The most secure paint and primer bonding is obtained by using an electrostatic painting process. For collectors intended to operate in the upper end of the medium temperature range and in the high temperature range, selective absorber coating is worthwhile, because it reduces radiation losses significantly. The most effective selective coating is black chrome, applied by an electroplating process over a nickel base. If applied on a material other than copper, the plating must be applied to both sides to avoid corrosion. Other galvanically applied selective coatings include black nickel, and aluminum oxide with nickel. Another suitable coating is a titanium-nitride-oxide layer, which is applied via steam in a vacuum process.

The tubes carrying the heat transfer medium (e.g. water or an anti-freeze solution such as water/glycol) may be soldered, brazed, snapped into grooves or inserted into spring-loaded extrusions. Wide spacing of tubes reduces collector cost, while close spacing increases cost, but improves efficiency. Cost effective collectors have sufficient spacing typically no more than 10 cm, preferably in a parallel grid arrangement of tubes. Another highly desirable design and construction feature is secure attachment of headers to water tubes. High quality collectors have the tubes brazed or welded to the headers and supported mechanically by insertion into sockets extracted directly from the header metal. In addition to high level insurance against leaks, and breakage at joints and from wind vibration, this method of attachment provides smooth easily balanced flow and reduces the possibility of corrosion.

### Transparent cover

The most preferred glazing material for the transparent cover in terms of service life and maintained transmissivity is tempered plate glass, borosilicate glass or Pyrex®. Of the various grades of tempered plate glass, low-iron glass has the highest transmission and lowest reflection of sunlight. These properties result in significant increases in collector efficiency.

The glazing material may also comprise glass having a structured surface. The structured glass surface will prevent direct reflections (of sunlight, for example), thereby suppressing an undesired mirror effect. Additionally, a structured glass surface will obscure direct view of the interior of the collector.

### Housing

The housing is used to contain the insulation, provide support for the absorber and glazing, and to protect the collector from heat loss due to wind, plus the important function of keeping moisture out of the insulation from rain and dew. The housing may be made of a broad variety of materials and designs, including wood cases, aluminum extrusions with sheet aluminum back, galvanized steel, welded or formed, and even collectors without back covers. Whatever the case material and construction, it must be weather resistant, fireproof, durable, dimensionally stable, strong and completely and permanently sealed against moisture intrusion. Steel should be both galvanized and primed before painting and baking and paint should be tough and scratch-resistant. Aluminum should be used with caution in areas exposed to salt air or industrial pollution and smog in the air. Top-quality collectors use cases or frames of architectural anodized aluminum similar to those used for exterior windows.

### Insulation

The mineral wool insulation of the solar collector according to the present invention is based on man-made vitreous fibres (MMVF) which are bonded by a formaldehyde-free polymeric binder system.

Suitable MMVF comprise, for instance, glass wool, glass filaments, ceramic fibres, basalt fibres, slag wool, stone wool, rock wool and other types of man-made vitreous fibres. Black (e.g. iron-containing) mineral wool is also useful for the purposes of the present invention.

The term "formaldehyde-free" as used in connection with the binder system, is meant to indicate that the binder composition is substantially free from formaldehyde, and does not liberate substantial formaldehyde as a result of drying and/or curing. Typically, less than about 1 ppm formaldehyde, based on the weight of the composition, is present in a formaldehyde-free composition.

### First embodiment of MMVF binder

In a first embodiment of the present invention, the formaldehyde-free polymeric binder system comprises the water-soluble reaction product of an alkanolamine with a carboxylic anhydride obtainable by reacting at least one alkanolamine with at least one carboxylic anhydride and, optionally, treating the reaction product with a base.

Preferred alkanolamines for use in the preparation of this binder system are alkanolamines having at least two hydroxy groups such as, for instance, alkanolamines represented by the formula 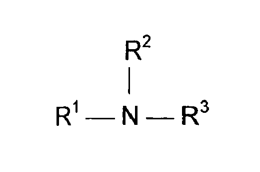 wherein R¹ is hydrogen, a C₁₋₁₀ alkyl group or a C₁₋₁₀ hydroxyalkyl group; and R² and R³ are C₁₋₁₀ hydroxyalkyl groups.

Preferably, R² and R³, independently are C₂₋₅ hydroxyalkyl groups, and R¹ is hydrogen, a C₁₋₅ alkyl group or a C₂₋₅ hydroxyalkyl group. Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane. Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

If two different anhydrides are employed, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3. Curing tests with the system THPA/TMA have surprisingly shown that a lower molar ratio of THPA to TMA results in a higher curing speed.

In the preparation of the binder composition, the proportion of the alkanolamine and carboxylic anhydride reactants is preferably selected such that the ratio of equivalents of amine plus hydroxy groups (NH+OH) to equivalents of carboxy groups (COOH) is at least 0.4, more preferably at least 0.6. By employing these minimum ratios, a too high excess of free unreacted acid is avoided which under specific conditions could lead to a displacement of binder in the curing oven, i.e. to a non-uniform distribution in amount of binder between the bottom and top of the mineral wool mat or web. Furthermore, high amounts of unreacted acid may increase corrosiveness.

On the other hand, the properties of the final binder composition, such as curing behaviour, durability and humidity resistance are determined by the total ratio of reactive groups present. Therefore, for optimum performance, the ratio of equivalents of amine plus hydroxy groups (NH+OH) to equivalents of carboxy groups (COOH) in the final binder composition is preferably adjusted to 2.0 or less, more preferably to 1.7 or less. In general, the final binder composition has an equivalent ratio of (NH+OH) / (COOH) within the range of from 1.25 to 1.55.

The reaction between the alkanolamine and carboxylic anhydride reactants is carried out in the usual manner, for instance, as described in WO 99/36368, WO 01/05725, WO 01/96460, WO 02/06178, WO 2004/007615 and WO 2006/061249, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA), triethanolamine (TEA) and dimethylethanolamine (DMEA). The base is preferably added to the reaction mixture after the reaction between the alkanol amine and the carboxylic anhydride has been actively stopped by adding water.

If appropriate, an additional acid monomer may be employed in the reaction and is preferably added to the reaction mixture before addition of the anhydride reactant. Specific examples of suitable acid monomers are di-, tri- and polycarboxylic acids such as adipic acid, citric acid, sebacic acid, azelaic acid, succinic acid, tartaric acid and trimellitic acid.

Furthermore, one or more polycarboxy crosslinking agents may be added after termination of the reaction and, optionally, together with the base. Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt.%, and up to 50, preferably up to 30 wt.%, more preferably up to 15 wt.%, based on the binder composition.

### Second embodiment of MMVF binder

In a second embodiment of the present invention, the formaldehyde-free polymeric binder system is an aqueous binder composition comprising:
(a) a polyacid component having acid groups, or anhydride or salt derivatives thereof; and
(b) a polyhydroxy component having hydroxyl groups;
wherein the pH of the binder composition is greater than about 7 and is preferably within the range of from about 7 to about 10.

In an illustrative embodiment, the composition includes a polyacid component and a polyhydroxy component where the ratio of the number of molar equivalents of acid groups, or anhydride or salt derivatives thereof, present on the polyacid component to the number of molar equivalents of hydroxyl groups present on the polyhydroxy component is in the range from about 0.6 : 1 to about 1.2 : 1.

In another illustrative embodiment, the composition includes a polyacid component that is a dicarboxylic acid, including, but not limited to, unsaturated aliphatic dicarboxylic acids, saturated aliphatic dicarboxylic acids, aromatic dicarboxylic acids, unsaturated cyclic dicarboxylic acids, saturated cyclic dicarboxylic acids, hydroxy-substituted derivatives thereof, and the like. In another illustrative embodiment, the composition includes a polyacid component that is a tricarboxylic acid, including, but not limited to, unsaturated aliphatic tricarboxylic acids, saturated aliphatic tricarboxylic acids, aromatic tricarboxylic acids, unsaturated cyclic tricarboxylic acids, saturated cyclic tricarboxylic acids, hydroxy-substituted derivatives thereof, and the like. In another illustrative embodiment, the composition includes a polyacid component that is a tetracarboxylic, pentacarboxylic, and like polycarboxylic acids, and salts and anhydride derivatives thereof, and combinations thereof. It is appreciated that any of these polyacids may be optionally substituted, such as with hydroxy, halo, alkyl, alkoxy, and the like.

Illustrative polyacid components are dicarboxylic acids, such as, for example, maleic acid. Other suitable polyacid components are contemplated to include, but are not limited to, aconitic acid, adipic acid, azelaic acid, butane tetracarboxylic acid dihydride, butane tricarboxylic acid, chlorendic acid, citraconic acid, citric acid, dicyclopentadiene-maleic acid adducts, diethylenetriaminepentaacetic acid, adducts of dipentene and maleic acid, endomethylenehexachlorophthalic acid, ethylenediamine tetraacetic acid (EDTA), fully maleated rosin, maleated tall oil fatty acids, fumaric acid, glutaric acid, isophthalic acid, itaconic acid, maleated rosin-oxidize unsaturation with potassium peroxide to alcohol then carboxylic acid, malic acid, mesaconic acid, biphenol A or bisphenol F reacted via the KOLBE-Schmidt reaction with carbon dioxide to introduce 3-4 carboxyl groups, oxalic acid, phthalic acid, polylactic acid, sebacic acid, succinic acid, tartaric acid, terephthalic acid, tetrabromophthalic acid, tetrachlorophthalic acid, tetrahydrophthalic acid, trimellitic acid, and trimesic acid, and anhydrides and salts thereof, and combinations thereof.

In an illustrative embodiment, the acid groups of the polyacid component of the formaldehyde-free, thermally curable, alkaline, aqueous binder composition are neutralized with a base, and thereby converted to acid salt groups, prior to their reaction with the hydroxyl groups of the polyhydroxy component to form the polyester resin. It is understood that complete neutralization, i.e., about 100% calculated on an equivalents basis, may eliminate any need to titrate or partially neutralize acid groups in the polyacid component prior to polyester formation, but it is anticipated that less-than-complete neutralization would not inhibit formation of the polyester.

"Base" as used herein, refers to a base which may be substantially volatile or non-volatile under conditions sufficient to promote formation of the polyester. Illustratively, the base may be a volatile base, such as, for example, aqueous ammonia ; alternatively, the base may be a non-volatile base, such as, for example, sodium carbonate, and other non-volatile bases, such as sodium hydroxide, potassium hydroxide, and the like are contemplated. Neutralization may be carried out either before or after the polyacid component is mixed with the polyhydroxy component.

In one illustrative aspect, the composition is an alkaline composition, where the polyacid component is neutralized by the addition of a base or where certain salts of the polyacid component are used. In another illustrative embodiment, the composition includes a polyacid component, such as succinic acid, citric acid, or fumaric acid and the like that has been neutralized by the addition of a base, or is a salt. In another illustrative embodiment, the polyacid component is maleic acid neutralized with, for example, aqueous ammonia. In another illustrative embodiment, the polyacid component is the ammonium salt of maleate.

The formaldehyde-free, thermally curable, alkaline, aqueous binder composition also includes a polyhydroxy component having hydroxyl groups. In one aspect, the polyhydroxy component is sufficiently nonvolatile to maximize its ability to remain available for reaction with the polyacid component. The polyhydroxy component may be a polyvinyl alcohol, a partially hydrolyzed polyvinyl acetate, such as, for example, an ELVANOL® (available from DuPont Packaging and Industrial Polymers; Wilmington, Delaware ; USA), or a mixture thereof.

In an illustrative embodiment, the formaldehyde-free, thermally curable, alkaline, aqueous binder composition may also include a catalyst capable of increasing the rate of polyester formation during curing of the binder compositions described herein. Illustratively, the catalyst may be an ammonium salt, such as, for example, ammonium para-toluene sulfonate or ammonium naphthalene disulfonate. Other suitable catalysts are contemplated to include, but are not limited to, ammonium sulfate, ammonium chloride, sulfuric acid, lactic acid, lead acetate, sodium acetate, calcium acetate, zinc acetate, organotin compounds, titanium esters, antimony trioxide, germanium salts, sodium hypophosphite, sodium phosphite, methanesulfonic acid and para-toluenesulfonic acid, and mixtures thereof.

In an illustrative embodiment, the formaldehyde-free, thermally curable, alkaline, aqueous binder composition may also include a silicon-containing coupling agent, e.g., an organosilicon oil, a silylether or alkylsilyl ether. In one aspect, the silicon-containing compound is an amino-substituted silane, such as, for example, gamma-aminopropyltriethoxy silane.

As described in WO 2005/087837, the formaldehyde-free, thermally curable, alkaline, aqueous binder composition according to the second embodiment may be prepared by admixing a 10-50 weight percent aqueous solution of a polyacid component, already neutralized or neutralized in the presence of the polyhydroxy component, a 10-30 weight percent aqueous solution of a polyhydroxy component, and, if desired, an aqueous solution of a catalyst capable of increasing the rate of polyester formation during curing, and also, if desired, a silicon-containing coupling agent. By varying the polyacid component, the polyhydroxy component, and optional catalyst and silicon-containing coupling agent compositions, the initial concentrations thereof, and the mixing ratio of solutions, a wide range of binder solution compositions can be prepared, wherein the pH of the binder composition is alkaline, and preferably in the range from about 7 to about 10.

### Third embodiment of MMVF binder

In a third embodiment of the present invention, the formaldehyde-free polymeric binder system is a binder composition comprising a polycarboxy polymer (especially a polyacrylic acid polymer), a polyhydroxy crosslinking agent, and a surfactant selected from the group consisting of cationic surfactants, amphoteric surfactants, nonionic surfactants, and mixtures thereof.

The binder composition is prepared by polymerization of monomers (preferably acrylic acid) emulsified in water using conventional emulsion polymerization procedures. Suitable surfactants are used for emulsification of the monomers, including cationic, amphoteric or nonionic surfactants, and mixtures thereof, with nonionic surfactants being preferred.

The binder composition comprises an organic polymer or oligomer containing a plurality of pendant carboxy groups which may be a homopolymer or copolymer prepared from unsaturated carboxylic acids including acrylic acid, methacrylic acid, crotonic acid, isocrotonic acid, maleic acid, cinnamic acid, 2-methylmaleic acid, itaconic acid, 2-methylitaconic acid, and the like. Alternatively, the polycarboxy polymer may be prepared from unsaturated anhydrides including maleic anhydride, itaconic anhydride, acrylic anhydride, methacrylic anhydride, and the like, as well as mixtures thereof.

The low molecular weight polycarboxy polymer produced in the first step of the process is reacted with a polyhydroxy crosslinking agent, such as triethanolamine, glycerol, trimethylolpropane, 1,2,4-butanetriol, ethyleneglycol, 1,3-propanediol, 1,4-butanediol, 1,6-hexanediol, pentaerythritol, sorbitol, and the like. No catalyst is necessary in this crosslinking step.

The polycarboxy polymer, polyhydroxy crosslinking agent and surfactant may be mixed in a conventional mixing device. The polycarboxy polymer may be present at a concentration from about 5% to about 50% by weight, preferably from about 10% to about 30% by weight, based on the total weight of the mixture. Water may be added to the solids mixture in any amount which would produce an aqueous binder having a viscosity and flow rate suitable for its application to a forming fibrous glass mat by any convenient method, such as by spraying. Conveniently, water may comprise up to about 98% by weight of the binder.

Examples of useful cationic surfactants include alkylamine salts such as laurylamine acetate, quaternary ammonium salts such as lauryl trimethyl ammonium chloride and alkyl benzyl dimethylammonium chlorides, and polyoxyethylenealkylamines. Examples of the amphoteric surfactants are alkylbetaines such as lauryl-betaine.

Examples of suitable nonionic surfactants are polyethers, e.g., ethylene oxide and propylene oxide condensates which include straight and branched chain alkyl and alkaryl polyethylene glycol and polypropylene glycol ethers and thioethers; alkylphenoxypoly(ethyleneoxy)ethanols having alkyl groups containing from 7 to 18 carbon atoms and having from about 4 to about 240 ethyleneoxy units, such as heptylphenoxypoly(ethyleneoxy) ethanols, nonylphenoxypoly(ethyleneoxy) ethanols; the polyoxyalkylene derivatives of hexitol including sorbitans, sorbides, mannitans, and mannides; partial long-chain fatty acids esters, such as the polyoxyalkylene derivatives of sorbitan monolaurate, sorbitan monopalmitate, sorbitan monostearate, sorbitan tristearate, sorbitan monooleate, and sorbitan trioleate; the condensates of ethylene oxide with a hydrophobic base, said base being formed by condensing propylene oxide with propylene glycol; sulfur containing condensates, e.g., those prepared by condensing ethylene oxide with higher alkyl mercaptans, such as nonyl, dodecyl, or tetradecyl mercaptan, or with alkylthiophenols wherein the alkyl group contains from about 6 to about 15 carbon atoms; ethylene oxide derivatives of long-chain carboxylic acids, such as lauric, myristic, palmitic, or oleic acids or mixtures of acids, such as tall oil fatty acids; ethylene oxide derivatives of long-chain alcohols such as octyl, decyl, lauryl, or cetyl alcohols; and ethylene oxide/propylene oxide copolymers.

The amounts of surfactants employed in the emulsion polymerization process will range from about 0.01 to about 10 weight percent, preferably about 0.2 to about 5 weight percent based on the total weight of monomers and water.

As described in US-A-2004/0152824, the polyacrylic acid and the polyhydroxy crosslinking agent may be mixed with water in a conventional mixing device. Water may be added to the mixture of acrylic acid monomer and polyhydroxy crosslinking agent in any amount which produces an aqueous binder mixture having a viscosity and flow rate suitable for application to a forming fibrous glass mat by any convenient method, e.g., spraying.

### Fourth embodiment of MMVF binder

In a fourth embodiment of the present invention, the formaldeyhde-free polymeric binder system is a heat-curable aqueous composition comprising
- at least one carboxyl-containing addition copolymer synthesized from
- 50 to 99.5% by weight of at least one ethylenically unsaturated mono- and/or dicarboxylic acid,
- 0.5 to 50% by weight of at least one ethylenically unsaturated compound selected from esters of ethylenically unsaturated monocarboxylic acids and monoesters and diesters of ethylenically unsaturated dicarboxylic acids with an amine having at least one hydroxyl group,
- up to 20% by weight of at least one further monomer,
- at least one β-hydroxyalkylamine of relatively high functionality, and
- if desired, at least one surfactant.
   The carboxyl-containing copolymers used in these binder compositions therefore incorporate from 50 to 99.5% by weight, preferably from 70 to 99% by weight, of structural units derived from ethylenically unsaturated monocarboxylic acids, ethylenically unsaturated dicarboxylic acids and/or their monoesters with C₁ to C₂₂ alkanols. In the copolymer, these acids may be wholly or partly in the form of a salt. The acidic form is preferred.
   In the preparation of the carboxyl-containing copolymer, it is possible to use not only the above-mentioned monomers but also the anhydrides of the ethylenically unsaturated monocarboxylic acids and the anhydrides of the ethylenically unsaturated dicarboxylic acids.
   Particularly preferred monomers for preparing the carboxyl-containing copolymers are maleic acid, maleic anhydride, acrylic acid, methacrylic acid, acrylic anhydride, methacrylic anhydride, itaconic acid, tetrahydrophthalic acid and the anhydrides thereof, and also the alkali metal salts and ammonium salts or mixtures thereof.
   With particular preference, the copolymer incorporates structural elements derived from acrylic acid or of a mixture of acrylic acid and maleic acid in a ratio of from 95:5 to 40:60, in particular in a ratio of from 90:10 to 50:50.
   The copolymer used in the compositions further contains from 0.5 to 50% by weight, preferably from 1 to 30% by weight, of at least one ethylenically unsaturated compound selected from esters of ethylenically unsaturated monocarboxylic acids and monoesters and diesters of ethylenically unsaturated dicarboxylic acids with at least one hydroxyl-containing amine, in copolymerized form.
   Monocarboxylic acids suitable as components of the esters are the above-mentioned C₃ to C₁₀ monocarboxylic acids, especially acrylic acid, methacrylic acid, crotonic acid and mixtures thereof.
   Dicarboxylic acids suitable as components of the monoesters and diesters are the above-mentioned C₄ to C₈ dicarboxylic acids, especially fumaric acid, maleic acid, 2-methylmaleic acid, itaconic acid, and mixtures thereof.
   The amine having at least one hydroxyl group is preferably selected from secondary and tertiary amines containing at least one C₆ to C₂₂ alkyl, C₆ to C₂₂ alkenyl, aryl-C₆ to C₂₂ alkyl or aryl-C₆ to C₂₂ alkenyl radical, it being possible for the alkenyl group to have 1, 2 or 3 nonadjacent double bonds.
   The amine is preferably hydroxyalkylated and/or alkoxylated. Alkoxylated amines preferably have one or two alkylene oxide residues with terminal hydroxyl groups. Preferably, the alkylene oxide residues each have from 1 to 100, preferably from 1 to 50, identical or different alkylene oxide units, distributed randomly or in the form of blocks. Preferred alkylene oxides are ethylene oxide, propylene oxide and/or butylene oxide. Ethylene oxide is particularly preferred.
   The polymer preferably comprises an unsaturated compound based on an amine component incorporating at least one amine of the formula

   R^{c}NR^{a}R^{b}
where
R^{c} is C₆ to C₂₂ alkyl, C₆ to C₂₂ alkenyl, aryl-C₆-C₂₂ alkyl or aryl-C₆-C₂₂ alkenyl, it being possible for the alkenyl radical to have 1, 2 or 3 nonadjacent double bonds,
R^{a} is hydroxy-C₁-C₆ alkyl or a radical of the formula II

-(CH₂CH₂O)ₓ(CH₂CH(CH₃)O)_{y}-H (II)

where
in the formula II the sequence of the alkylene oxide units is arbitrary and x and y independently of one another are integers from 0 to 100, preferably from 0 to 50, the sum of x and y being > 1,
R^{b} is hydrogen, C₁ to C₂₂ alkyl, hydroxy-C₁-C₆ alkyl, C₆ to C₂₂ alkenyl, aryl-C₆-C₂₂ alkyl, aryl-C₆-C₂₂ alkenyl or C₅ to C₈ cycloalkyl, it being possible for the alkenyl radical to have 1, 2 or 3 nonadjacent double bonds,
or R^{b} is a radical of the formula III

-(CH₂CH₂O)ᵥ(CH₂CH(CH₃)O)_{w}-H (III)

where
in the formula III the sequence of the alkylene oxide units is arbitrary and v and w independently of one another are integers from 0 to 100, preferably from 0 to 50.

Preferably R^{c} is C₈ to C₂₀ alkyl or C₈ to C₂₀ alkenyl, it being possible for the alkenyl radical to have 1, 2 or 3 nonadjacent double bonds. R^{c} is preferably the hydrocarbon radical of a saturated or mono- or polyunsaturated fatty acid. Preferred radicals R^{c} are, for example, n-octyl, ethylhexyl, undecyl, lauryl, tridecyl, myristyl, pentadecyl, palmityl, margarinyl, stearyl, palmitoleinyl, oleyl and linolyl.

With particular preference, the amine component comprises an alkoxylated fatty amine or an alkoxylated fatty amine mixture. The ethoxylates are particularly preferred. Use is made in particular of alkoxylates of amines based on naturally occurring fatty acids, such as tallow fatty amines, for example, which contain predominantly saturated and unsaturated C₁₄, C₁₆ and C₁₈ alkylamines, or cocoamines, containing saturated, mono- and diunsaturated C₆-C₂₂, preferably C₁₂-C₁₄ alkylamines.

Copolymerization of the above-mentioned esters, monoesters and diesters generally brings about a reduction in the surface tension of the compositions.

The esterification for preparing the above-described esters, monoesters and diesters takes place in accordance with customary techniques. To prepare esters of unsaturated monocarboxylic acids, the free acids or suitable derivatives, such as anhydrides, halides, e.g., chlorides, and C₁ to C₄ alkyl esters may be used. The preparation of monoesters of unsaturated dicarboxylic acids takes place preferably starting from the corresponding dicarboxylic anhydrides. The reaction is preferably effected in the presence of a catalyst, such as a dialkyl titanate or an acid, such as sulfuric acid, toluenesulfonic acid, or methanesulfonic acid, for example. The reaction takes place generally at reaction temperatures from 60 to 200°C. In accordance with one appropriate embodiment, the reaction takes place in the presence of an inert gas, such as nitrogen. Water formed during the reaction may be removed from the reaction mixture by means of appropriate measures, such as distillation. The reaction may take place if desired in the presence of customary polymerization inhibitors. Essentially, the esterification reaction may be conducted to completion or just to a partial conversion. If desired, one of the ester components, preferably the hydroxyl-containing amine, may be used in excess. The extent of esterification may be determined by means of infrared spectroscopy.

In one preferred embodiment, the unsaturated esters, monoesters or diesters are prepared and further reacted to the copolymers without isolation of the esters, the reactions preferably taking place in succession in the same reaction vesssel.

To prepare the copolymers it is preferred to use a reaction product of a dicarboxylic anhydride, preferably maleic anhydride, and one of the above-described hydroxyl-containing amines.

The polymers may advantageously also be prepared by means of polymer-analogous reaction. For this purpose a polymer incorporating from 80 to 100% by weight of at least one ethylenically unsaturated mono- and/or dicarboxylic acid may be reacted with at least one hydroxyl-containing amine.

Suitable ethylenically unsaturated mono- and dicarboxylic acids are those mentioned above. Suitable amines having at least one hydroxyl group are likewise as mentioned above. In the polymer suitable for polymer-analogous reaction, the acids may, if desired, be present wholly or partly in the form of a derivative, preferably a C₁ to C₆ alkyl ester.

In one suitable embodiment, the copolymers incorporate as further monomer at least one compound selected from olefins, preferably ethylene, propene, n-butene, isobutene and/or diisobutene, vinylaromatic compounds, preferably styrene, esters of α,β-ethylenically unsaturated mono- and/or dicarboxylic acids with C₁ to C₂₂ alkanols, preferably (meth)acrylic esters, and mixtures thereof.

Preferred further monomers are
- linear and branched-chain 1-olefins or cyclic olefins such as ethylene, propene, butene, isobutene, diisobutene, pentene, cyclopentene, hexene, cyclohexene, octene, and 2,4,4-trimethyl-1-pentene, alone or mixed with 2,4,4-trimethyl-2-pentene, C₈ to C₁₀ olefin, 1-dodecene, C₁₂ to C₁₄ olefin, octadecene, 1-eicosene (C₂₀), C₂₀ to C₂₄ olefin; oligoolefins prepared with metallocene catalysis and having a terminal double bond, such as oligopropene, oligohexene and oligooctadecene; olefins prepared by cationic polymerization and having a high α-olefin content, such as polyisobutene, for example;
- esters of preferably C₃ to C₆ α,β-monoethylenically unsaturated mono- or dicarboxylic acid, such as acrylic acid, methacrylic acid, maleic acid, fumaric acid, and itaconic acid, with C₁-C₁₂, preferably C₁-C₈ alkanols. Such esters are in particular methyl, ethyl, n-butyl, isobutyl, tert-butyl, n-pentyl, isopentyl and 2-ethylhexyl acrylate and/or methacrylate;
- vinylaromatic compounds, preferably styrene, α-methylstyrene, o-chlorostyrene, vinyltoluenes and mixtures thereof.

Particularly preferred further monomers are ethylene, propene, isobutene, diisobutene, styrene, methyl (meth)acrylate, ethyl (meth)acrylate, n-butyl (meth)acrylate, 2-ethylhexyl (meth)acrylate, and mixtures thereof. The copolymers are prepared preferably by free-radical addition polymerization in bulk or in solution.

Preparation in solution polymerization takes place generally in water as solvent. It is, however, also possible for water-miscible organic solvents, such as alcohols and ketones, e.g., methanol, ethanol, n-propanol, isopropanol, n-butanol, acetone or methyl ethyl ketone, to be present in a proportion of up to approximately 30% by volume.

The polymerization is preferably conducted in the presence of compounds which form free radicals (initiators). The amount required of these compounds is preferably from 0.05 to 10, with particular preference from 0.2 to 5% by weight, based on the monomers used in the polymerization.

Examples of suitable polymerization initiators are peroxides, hydroperoxides, peroxodisulfates, percarbonates, peroxo esters, hydrogen peroxide, and azo compounds. Examples of initiators, which can be soluble in water or else insoluble in water, are hydrogen peroxide, dibenzoyl peroxide, dicyclohexyl peroxodicarbonate, dilauroyl peroxide, methyl ethyl ketone peroxide, di-tert-butyl peroxide, acetylacetone peroxide, tert-butyl hydroperoxide, cumene hydroperoxide, tert-butyl perneodecanoate, tert-amyl perpivalate, tert-butyl perpivalate, tert-butyl perneohexanoate, tert-butyl per-2-ethylhexanoate, tert-butyl perbenzoate, lithium, sodium, potassium and ammonium peroxodisulfates, azodiisobutyronitrile, 2,2'-azobis(2-amidinopropane) dihydrochloride, 2-(carbamoylazo)isobutyronitrile, and 4,4'-azobis(4-cyanovaleric acid). The known redox initiator systems as well, such as H₂O₂/ascorbic acid or tert-butyl hydroperoxide/sodium hydroxymethanesulfinate, for example, can be used as polymerization initiators.

The initiators can be employed alone or in a mixture with one another, examples being mixtures of hydrogen peroxide and sodium peroxodisulfate. For polymerization in an aqueous medium it is preferred to use water-soluble initiators.

In addition to the above-described carboxyl-containing polymers, the heat-curable aqueous compositions according to the fourth embodiment further comprise at least one β-hydroxylamine of relatively high functionality. The weight ratio between copolymer and β-hydroxyalkylamine is preferably from 1:1 to 1:0.01, more preferably from 1:1 to 1:0.1.

Appropriate higher-functional β-hydroxyalkylamines include preferably compounds of the formula 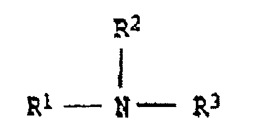 where R¹ is a hydrogen atom, a C₁ to C₁₀ alkyl group, a C₁ to C₁₀ hydroxyalkyl group, or a radical of the formula IV

-(CH₂CH₂O)ₓ(CH₂CH(CH₃)O)_{y}-H (IV)

where
in the formula IV the sequence of the alkylene oxide units is arbitrary and x and y independently of one another are integers from 0 to 100, the sum of x and y being > 1, and R² and R³ independently of one another are a C₁ to C₁₀ hydroxyalkyl group.

With particular preference, R² and R³ independently of one another are a C₂ to C₅ hydroxyalkyl group and R¹ is a hydrogen atom, a C₁ to C₅ alkyl group or a C₂ to C₅ hydroxyalkyl group.

Particular preference is given to diethanolamine, triethanolamine, diisopropanolamine, triisopropanolamine, methyldiethanolamine, butyldiethanolamine and methyldiisopropanolamine, especially triethanolamine.

Further preferred β-hydroxyalkylamines are the amines disclosed as component A in DE-A-19621573. They include preferably linear or branched aliphatic compounds containing per molecule at least two functional amino groups of type (a) or (b) 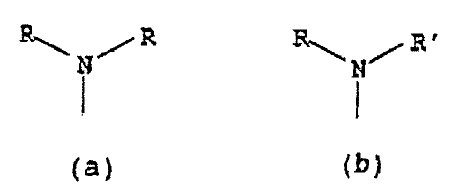 where R is hydroxyalkyl and R' is alkyl, preferably a compound of formula I 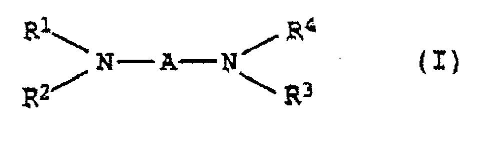 where
A is C₂-C₁₈ alkylene substituted or unsubstituted by one or more groups selected independently of one another from alkyl, hydroxyalkyl, cycloalkyl, OH and NR⁶R⁷, R⁶ and R⁷ independently of one another being hydrogen, hydroxyalkyl or alkyl, and which is uninterrupted or interrupted by one or more oxygen atoms and/or NR⁵ groups, R⁵ being hydrogen, hydroxyalkyl, (CH₂)ₙNR⁶R⁷, where n is from 2 to 5 and R⁶ and R⁷ are as defined above, or alkyl, which may in turn be interrupted by one or more NR⁵ groups, R⁵ possessing the above-mentioned definitions, and/or substituted by one or more NR⁶R⁷ groups, R⁶ and R⁷ possessing the above-mentioned definitions;
or A is a radical of the formula: 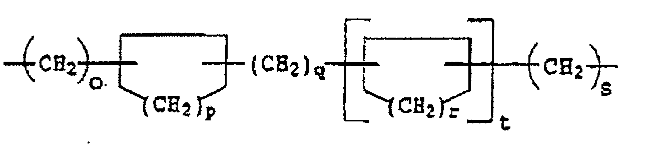 where
o, q and s independently of one another are 0 or an integer from 1 to 6,
p and r independently of one another are 1 or 2, and
t is 0, 1 or 2,
it also being possible for the cycloaliphatic radicals to be substituted by 1, 2 or 3 alkyl radicals, and
R¹, R² and R³ and R⁴ independently of one another are hydrogen, hydroxyalkyl, alkyl or cycloalkyl.

Preferred β-hydroxyalkylamines of relatively high functionality are, in particular, at least doubly ethoxylated amines having a molar weight of less than 1000 g/mol, such as diethanolamine, triethanolamine and ethoxylated diethylenetriamine, for example, preferably an ethoxylated diethylenetriamine, in which on average all nitrogen-attached hydrogen atoms are monoethoxylated.

In one suitable embodiment, the heat-curable aqueous composition of the invention comprises at least one surfactant, which may but need not necessarily be identical with the above-described hydroxy-containing amine.

If the compositions according to the fourth embodiment comprise as at least one additional surfactant at least one amine which corresponds to the hydroxyl-containing amines used above to prepare the esters and monoesters, then this amine may if desired be added separately to the compositions or may be used in an appropriate excess during the preparation of said esters.

As additional surfactants, the compositions preferably comprise from 0 to 50% by weight, preferably from 0.1 to 40% by weight, based on the copolymer, of at least one surface-active, alkoxylated, preferably ethoxylated or propoxylated, alkylamine. Preferred alkylamines are the alkylamines of the formula R^{c}NR^{a}R^{b}, as defined above, which are also present in the copolymer, particular preference being given to alkylamines of the formula 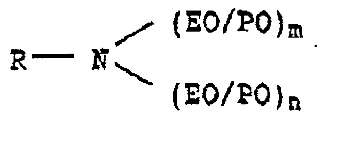 where R is an alkyl, alkenyl or alkylvinyl radical having at least 6 carbon atoms and m and n independently of one another are ≥ 1. Preferred radicals R have 8 to 22 carbon atoms.

Further suitable long-chain amines are also for example the ethoxylated amines sold by AKZO as Ethomeen®, such as Ethomeen® C/15, a poly-oxyethylene-(5)-cocoamine, or Ethomeen® S/12, an oleylbis(2-hydroxyethyl)amine, or Ethomeen® T/25, a polyoxyethylene-(15)-tallowamine.

Preferred additional surfactants are ethoxylated long-chain mono- and diamines. To prepare the novel compositions use may also be made, however, of other long-chain primary, secondary or tertiary aliphatic amines. Examples are the AKZO products Armeen® DMOD (oleyldimethylamine), Armeen® M2C (dicocomethylamine), Armeen® NCMD (N-cocomorpholine), Armeen® 2C (Dicocoamine) or Armeen® 12D (n-dodecylamine).

If desired, the compositions according to the fourth embodiment may further comprise at least one additional crosslinker. Preference is given to amine or amide crosslinkers which contain at least two hydroxyl groups. Preferred crosslinkers are the alkanolamines described in DE-A-19729161, especially the β-hydroxyalkylamides described in US-A-5,143,582, of the formula

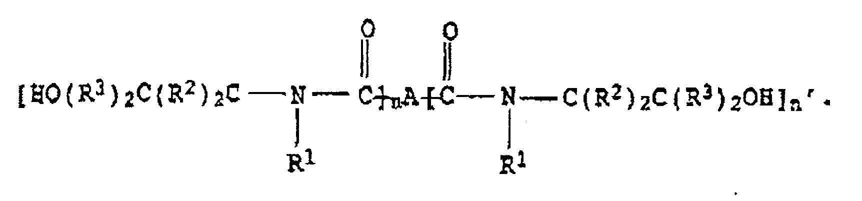

Particularly preferred β-hydroxyalkylamides are those in which R¹ is hydrogen, a lower alkyl, or HO(R³)₂C(R²)₂C-, n and n' are each 1, -A- is -(CH₂)ₘ-, m is from 0 to 8, preferably from 2 to 8, R² both are hydrogen, and in each case one of the R³ groups is hydrogen and the other is hydrogen or a C₁-C₅ alkyl.

As described in DE-A-19949591, the compositions are prepared preferably by solution polymerization in order to obtain a carboxyl-containing copolymer, followed by addition of the other components of the composition. The solution polymerization preferably takes place in water. Alternatively, it is possible to use water-miscible organic solvents, such as alcohols and ketones, e.g., methanol, ethanol, acetone, and their mixtures with water.

A typical process for preparing the compositions comprises
i) reacting at least one ethylenically unsaturated monocarboxylic acid or derivative thereof and/or at least one ethylenically unsaturated dicarboxylic acid or a derivative thereof with at least one hydroxyl-containing amine in an esterification reaction,
ii) reacting the reaction product(s) from step i) with at least one ethylenically unsaturated mono- and/or dicarboxylic acid and/or anhydrides thereof and, if desired, at least one further monomer, to give a carboxyl-containing copolymer, and
iii) mixing the copolymer from step ii) with at least one β-hydroxyalkylamine of relatively high functionality, if desired, at least one surfactant, and, if desired, further additives.

Among the four types of MMVF binders described above, the binder according to the first embodiment is particularly preferred owing to its excellent properties.

### Other Components of Binder Composition

The binder compositions according to all four embodiments of present invention may additionally comprise one or more conventional binder additives. These include, for instance, curing accelerators such as, e.g., β-hydroxyalkylamides; the free acid and salt forms of phosphoric acid, hypophosphorous acid, phosphonic acid, phosphinic acid, citric acid and adipic acid. Other strong acids such as boric acid, sulphuric acid, nitric acid and p-toluenesulphonic acid may also be used, either alone or in combination with the just mentioned acids, in particular with phosphoric, hypophosphorous acid, phosphonic or phosphinic acid. Other suitable binder additives are silane coupling agents such as γ-aminopropyltriethoxysilane; thermal stabilizers; UV stabilizers; emulsifiers; surface active agents, particularly nonionic surfactants; biocides; plasticizers; anti-migration aids; coalescents; fillers and extenders such as carbohydrates, clay, silicates and magnesium sulfate; pigments such as titanium dioxide; hydrophobizing agents such as fluorinated compounds, mineral oils and silicone oils; flame retardants; corrosion inhibitors such as thiourea; urea; antifoaming agents; antioxidants; and others.

These binder additives and adjuvants may be used in conventional amounts generally not exceeding 20 wt.% of the binder solids. The amount of curing accelerator in the binder composition is generally between 0.05 and 5 wt.%, based on solids.

### Final Binder Composition

The binder according to the present invention preferably has a solids content of from 10 to 40 wt.%. This is often the concentration range of the binder in storage containers before use. In a form ready for application, the aqueous binder composition preferably has a solids content of from 1 to 20 wt.%. In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of the polymeric binder component (lower reaction temperature, stopping the reaction by adding water at an earlier reaction stage, etc.), and by properly adjusting the relative amounts of the binder components and water solvent.

### Insulation product

For producing the mineral wool solar collector insulation, the formaldehyde-free aqueous binder composition according to the present invention may be applied to the mineral fibres or mineral fibre products by conventional techniques such as, e.g., air or airless spraying, rotating disc atomization, padding, saturating, roll coating, curtain coating, beater deposition, or the like.

The mineral fibres may be any of man-made vitreous fibres (MMVF), glass fibres, ceramic fibres, basalt fibres, slag wool, rock wool, stone wool and others. The mineral fibre products are, for instance, woven and nonwoven fabrics, mats, batts, slabs, sheets and other shaped articles.

For the manufacture of solar collector insulation parts, the polymeric binder is normally applied in an amount of 0.1 to 10 %, preferably 0.2 to 5 % by weight, of the bonded mineral wool product on a dry basis. It is also possible to establish a concentration gradient of binder over the thickness of the mineral wool insulation such that the binder concentration is lowest in the (hot) upper region next to the absorber whereas it is higher in the lower region adjacent to the housing.

In general, the binder composition is applied, normally by spraying, immediately after fiberization of the mineral melt whereupon the coated mineral wool is cured in a curing oven wherein heated air is passed through the mineral wool web to cure the binder. Typically, the curing oven is operated at a temperature of from about 200°C to about 400°C. Preferably, the curing temperature ranges from about 225 to about 300°C. Generally, the curing oven residence time is from 30 seconds to 20 minutes, depending on, for instance, the product density.

Besides thermal curing (e.g. using heated air) other curing methods may be employed, for example curing with microwave or infrared radiation. If desired, the mineral wool web may also be subjected to a shaping process before curing.

The bonded mineral wool product emerging from the curing oven in the form of a bat may be cut to a desired format in accordance with the dimensions of the solar collector. The mineral wool insulation according to the present invention may, for instance, have the form of a sheet, plate, mat or strip and can be used for insulating the back and/or the side walls of the solar collector housing.

The mineral wool insulation according to the present invention preferably has a thermal conductivity of ≤ 0.040 W/mK and a bulk density of from 10 to 120 kg/m³. The thickness of the mineral wool insulation typically is from 10 to 80 mm.

In accordance with the present invention it is also possible to produce composite materials by combining the bonded mineral wool product with suitable composite layers or laminate layers formed of a heat-resistant material such as metal, glass surfacing mats and other woven or non-woven materials. In practice, the mineral wool insulation of the solar collector is often combined with a cover layer of aluminum foil or coated with a silicate paint.

The mineral wool insulation according to the present invention sustains the high temperatures (up to 260°C) that occur during operation of the solar collector, particularly during stagnation periods, without any harmful emissions that could cause undesired fogging of the transparent cover. The bonded mineral wool insulation is also resistant to ageing and exhibits good moisture resistance.

### Solar heating systems

The solar collector of the present invention may be used in solar heating systems which typically consist of the collector; a heat transfer circuit that includes the fluid and the means to circulate it; and a storage system including a heat exchanger (if the fluid circulating through the collector is not the same liquid being used to heat the object of the system). The system may or may not include secondary distribution of heat among different storage reservoirs or users of the heat. The system can be used in a variety of ways, including warming domestic hot water, heating swimming pools, heating water for a radiator or floor-coil heating circuit, heating an industrial dryer, or providing input energy for a cooling system, among others. The heat is normally stored in insulated water storage tanks.

## Claims

1. A solar collector comprising a mineral wool insulation based on man-made vitreous fibres (MMVF) which are bonded by a formaldehyde-free polymeric binder system.

2. The solar collector of claim 1 wherein the man-made vitreous fibres are selected from glass wool, glass filaments, ceramic fibres, basalt fibres, slag wool, stone wool and rock wool.

3. The solar collector of claim 1 or 2 wherein the insulation comprises black mineral wool.

4. The solar collector of any one of claims 1 to 3 wherein the formaldehyde-free polymeric binder system the water-soluble reaction product of an alkanolamine with a carboxylic anhydride obtainable by reacting at least one alkanolamine with at least one carboxylic anhydride and, optionally, treating the reaction product with a base.

5. The solar collector of any one of claims 1 to 3 wherein the formaldehyde-free polymeric binder system comprises:
(a) a polyacid component having acid groups, or anhydride or salt derivatives thereof; and
(b) a polyhydroxy component having hydroxyl groups;
wherein the pH of the binder composition is greater than about 7 and is preferably within the range of from about 7 to about 10.

6. The solar collector of claim 5 wherein the ratio of the number of molar equivalents of acid groups, or anhydride or salt derivatives thereof, present on the polyacid component to the number of molar equivalents of hydroxyl groups present on the polyhydroxy component is in the range from about 0.6 : 1 to about 1.2 : 1.

7. The solar collector of any one of claims 1 to 3 wherein the formaldehyde-free polymeric binder system comprises a heat-curable aqueous composition comprising
- at least one carboxyl-containing addition copolymer synthesized from
- 50 to 99.5% by weight of at least one ethylenically unsaturated mono- and/or dicarboxylic acid,
- 0.5 to 50% by weight of at least one ethylenically unsaturated compound selected from esters of ethylenically unsaturated monocarboxylic acids and monoesters and diesters of ethylenically unsaturated dicarboxylic acids with an amine having at least one hydroxyl group,
- up to 20% by weight of at least one further monomer,
- at least one β-hydroxyalkylamine of relatively high functionality, and
- if desired, at least one surfactant.

8. The solar collector of any one of claims 1 to 7 wherein the polymeric binder is applied in an amount of 0.2 to 5 % by weight of the bonded mineral wool product on a dry basis.

9. The solar collector of claim 8 wherein the polymeric binder is applied in a concentration gradient over the thickness of the mineral wool insulation such that the binder concentration is lowest in the upper region next to the absorber whereas it is higher in the lower region adjacent to the housing.

10. The solar collector of any one of claims 1 to 9 wherein the mineral wool insulation has a thermal conductivity of ≤ 0.040 W/mK and a bulk density of from 10 to 120 kg/m³.

11. A solar heating system comprising the solar collector according to any one of claims 1 to 10.
